# EUROPEAN PATENT APPLICATION

(11) **EP 3 680 118 A1**
(43) Date of publication of application: **15.07.2020**
(21) Application number: 18854862.2
(22) Date of filing: 31.08.2018
(51) Int. Cl.: B60J 1/00, B60J 5/10, B60R 11/02, B60S 1/58, H01Q 1/32, H01Q 1/52, H05B 3/84

(54) **REAR GLASS AND BACKDOOR HAVING REAR GLASS**

(30) Priority: 05.09.2017 JP 2017170703
(71) Applicant: Nippon Sheet Glass Company, Limited, Tokyo 108-6321 (JP)
(72) Inventor: TANAKA, Kosuke, Tokyo 108-6321 (JP); OKA, Hidetoshi, Tokyo 108-6321 (JP)
(74) Representative: Mewburn Ellis LLP
(86) International application number: PCT/JP2018/032364
(87) International publication number: WO 2019/049783

(57) **Abstract**

A rear glass according to the present invention is a rear glass configured to be attachable to an opening part of a resin panel in a rear of a vehicle, the rear glass including a glass plate configured to be attached so as to incline downward progressing in a rearward direction, a defogger configured to heat a vision area of the glass plate, and an antenna that is arranged downward of the defogger.

## Description

### Technical Field

The present invention relates to a rear glass and a back door provided with the rear glass.

### Background Art

Some automobiles include a door referred to as a back door mounted thereto. This back door is a lift-up door for closing an opening in a rear of a vehicle, and the door and a rear glass are integrally formed. Such a back door is disclosed in Patent Literature 1, for example. A defogger for removing fog is mounted on the rear glass of the back door disclosed in Patent Literature 1. Also, an antenna substrate provided with an FM antenna and an AM antenna is arranged upward of the rear glass of the back door. This antenna substrate is built into a space between an inner panel and an outer panel that form the back door.

### Citation List

### Patent Literature

Patent Literature 1: JP 2016-43842A

### Summary of Invention

### Technical Problem

However, since the above-described back door is provided with the defogger in the rear glass as well as the antenna, there are cases in which the reception performance of the antenna is affected by the defogger, which is made of a metal. Accordingly, a back door that is unlikely to be affected by the defogger and that can improve the reception sensitivity of an antenna has been desired. The present invention has been made to solve this problem and an object thereof is to provide a back door that can improve the reception sensitivity of an antenna.

### Solution to Problem

The rear glass according to the present invention is a rear glass configured to be attachable to an opening part of a resin panel in a rear of a vehicle, the rear glass including a glass plate configured to be attached so as to incline downward progressing in a rearward direction, a defogger configured to heat a vision area of the glass plate, and an antenna that is arranged downward of the defogger.

With this configuration, the glass plate that forms the rear glass is mounted so as to incline downward progressing in the rearward direction. For this reason, a metal is not arranged rearward of the defogger provided on the glass plate. Furthermore, since the antenna is arranged downward of the defogger, a metal, in other words, a material that interferes with the reception of radio waves, is not arranged rearward of the antenna. Accordingly, it is possible to facilitate the reception of radio waves from rearward of the vehicle, and improve the reception sensitivity.

In the above-described rear glass, the antenna may be a DTV antenna or a DAB antenna.

In the above-described rear glass, the antenna may be a DTV antenna.

In the above-described rear glass, the glass plate may be attached to the vehicle at an angle of less than or equal to 70°.

In the above-described rear glass, the antenna may include two power supply parts, and two conductive linear elements extending from the two power supply parts, respectively, and the two power supply parts and the two conductive linear elements may be arranged only downward of the defogger.

A back door according to the present invention is a back door that is attachable to a rear of a vehicle, the back door including a rear glass, a defogger configured to heat a vision area of the rear glass, a resin panel that includes an opening part and that supports the rear glass such that the rear glass inclines downward progressing in a rearward direction so as to cover the opening part, and at least one DTV antenna or DAB antenna, and the antenna is arranged downward of the defogger of the rear glass or downward of the rear glass of the panel.

In the above-described back door, at least one of the antennas may be a DTV antenna. For example, a DTV antenna receives a broadcast wave in a higher frequency band than AM broadcast waves and FM broadcast waves, and therefore, a DTV antenna is particularly likely to be affected by a metal. Accordingly, if the DTV antenna is arranged downward of the defogger or on the panel, it is particularly advantageous.

The above-described back door may be provided with a plurality of the antenna including a first antenna and a second antenna, and the first antenna may be arranged downward of the defogger on the rear glass, and the second antenna may be arranged on the panel. This makes it possible to achieve a diversity effect, which can improve the reception sensitivity of the antennas.

With a rear glass and a back door including the rear glass according to the present invention, it is possible to improve the reception sensitivity of an antenna.

### Brief Description of Drawings

FIG. 1 is a perspective diagram showing a back door according to the present invention.
FIG. 2 is a cross-sectional view taken along line A-A in FIG. 1.
FIG. 3 is an exploded perspective view of the back door shown in FIG. 1.
FIG. 4 is a front view of a rear glass of the back door shown in FIG. 1.
FIG. 5 is a front view of a rear glass showing another example of FIG. 4.
FIG. 6 is a cross-sectional view of a back door showing another example of FIG. 2.
FIG. 7 is a front view of a rear glass showing another example of FIG. 4.
FIG. 8 is an enlarged view showing dimensions of an antenna of a rear glass according to working example 1.
FIG. 9 is an enlarged view showing dimensions of an antenna of a rear glass according to working example 2.
FIG. 10 is an enlarged view showing dimensions of an antenna of a rear glass according to working example 3.
FIG. 11 is a graph showing a relationship between frequency and reception performance in working example 1.
FIG. 12 is a graph showing a relationship between frequency and reception performance in working example 2.
FIG. 13 is a graph showing a relationship between frequency and reception performance in working example 3.
FIG. 14 is a front view showing a back door according to working example 4.
FIG. 15 is a front view showing a back door according to comparative example 1.
FIG. 16 is a graph showing a relationship between attachment angle of a glass plate and reception performance at 470 MHz frequency in working example 4 and comparative example 1.
FIG. 17 is a graph showing a relationship between attachment angle of a glass plate and reception performance at 595 MHz frequency in working example 4 and comparative example 1.
FIG. 18 is a graph showing a relationship between an attachment angle of a glass plate and reception performance at 720 MHz frequency in working example 4 and comparative example 1.

### Description of Embodiments

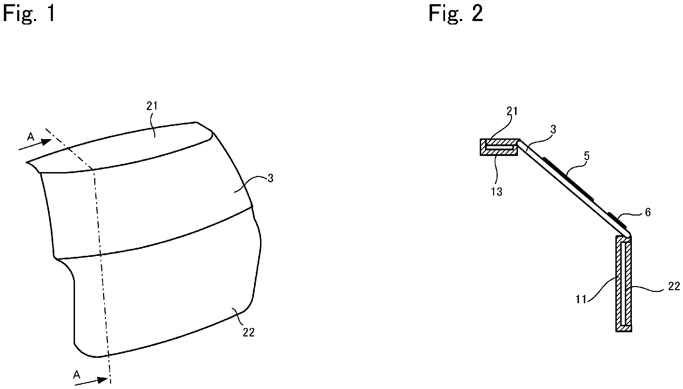

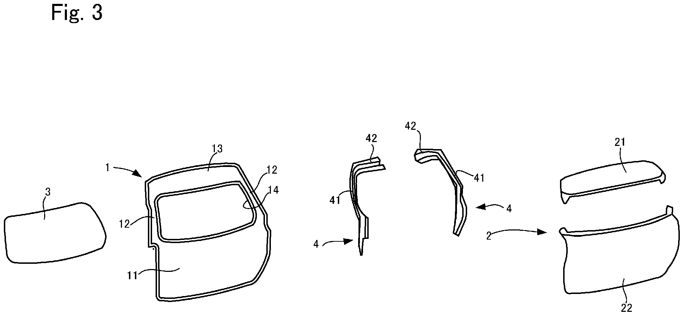

Hereinafter, an embodiment of a back door according to the present invention will be described with reference to the drawings. FIG. 1 is a perspective view of a back door according to this embodiment, FIG. 2 is a cross-sectional view taken along line A-A in FIG. 1, and FIG. 3 is an exploded perspective view of the back door shown in FIG. 1. Note that, hereinafter, for convenience of description, for example, the up-down direction in FIG. 1 may be referred to as the up-down direction or the vertical direction, and the left-right direction in FIG. 1 may be referred to as the left-right direction or the horizontal direction, based on the orientations of the drawings. However, these directions are not intended to limit the present invention.

### 1. Overview of Back Door

As shown in FIG. 1, a back door according to this embodiment is for closing an opening (not shown) in the rear of a hatchback vehicle, for example, and is attached to a roof panel (not shown) of the vehicle that forms an upper edge of this opening with a hinge (not shown) . In other words, the back door constitutes a flip-up door. Specifically, the back door is constituted as follows. Note that, in the following description, when indicating directions of various parts of the back door, unless otherwise specified, the directions in a state where the opening is closed are indicated.

As shown in FIGS. 1 to 3, the back door includes an inner panel 1 arranged on the vehicle inner side, upper panels 21, 22 that are mounted on the vehicle outer side of the inner panel, a rear glass 3, and a pair of reinforcing frames 4 that are arranged on the upper portion of the inner panel 1.

As shown in FIG. 3, the inner panel 1 is provided with a rectangular main body part 11, a pair of side edge parts 12 that are attached to the upper end portion of this main body part 11, and the upper edge part 13 that joins the upper ends of the two side edge parts 12, that are integrally formed. The main body part 11 is a portion that closes the lower part of the opening, and is formed so as to extend generally in the vertical direction when the opening is closed. The pair of side edge parts 12 extend obliquely upward from the two sides of the upper edge of the main body part 11. In other words, the side edge parts 12 extend obliquely toward the front of the vehicle progressing in an upward direction. Also, since the upper edge part 13 joins the upper ends of the side edge parts 12, a rectangular window opening part 14 is formed by the upper edge of the main body part 11, the two side edge parts 12, and the upper edge part 13. A rear glass 3 is mounted so as to close this window opening part 14.

The outer panel is formed by two members, namely, an upper panel 21 and a lower panel 22. The upper panel 21 is a rectangular member that covers the upper edge part 13 of the inner panel 1. The lower panel 22 is a member that covers the main body part 11 of the inner panel 1. Accordingly, the rear glass 3 is mounted between the upper panel 21 and the lower panel 22.

Since the two reinforcing frames 4 are symmetrically shaped, only the left reinforcing frame 4 will be described here. This reinforcing frame 4 is an L-shaped member including a first portion 41 that extends in the up-down direction and a second portion 42 that is joined to the upper edge of the first portion 41 and extends horizontally rightward, these portions being integrally formed. This reinforcing frame 4 is arranged between the inner panel 1 and the upper panels 21, 22. In other words, the first portion 41 of the reinforcing frame 4 is attached to a region of the inner panel 1 corresponding to the side edge part 12 and the vicinity of the upper end of the main part 11 that is continuous with the side edge part 12. On the other hand, the second portion 42 is attached to a region of the inner panel 1 extending from the left end part to a vicinity of the center of the upper edge part 13. Accordingly, the vicinity of the upper end of the main body part 11, the two side edge parts 12, and the upper edge part 13 of the inner panel 1 are reinforced by the two reinforcing frames 4.

The inner panel 1, the upper panel 21, the lower panel 22, and the reinforcing frame 4 are formed of a resin material. For example, carbon fiber reinforced plastic (CFRP) may be adopted. Note that, the lower panel 22 contributes little to the rigidity of the back door, and thus can be made of a resin material such as polypropylene.

Note that, the attachment angle of the rear glass 3 that is fitted in the above-described opening part is not particularly limited, and may be 45° to 90°, or preferably 45° to 70°. Note that, an attachment angle of 90° means a state in which the rear glass extends in the vertical direction.

### 2. Overview of Rear Glass

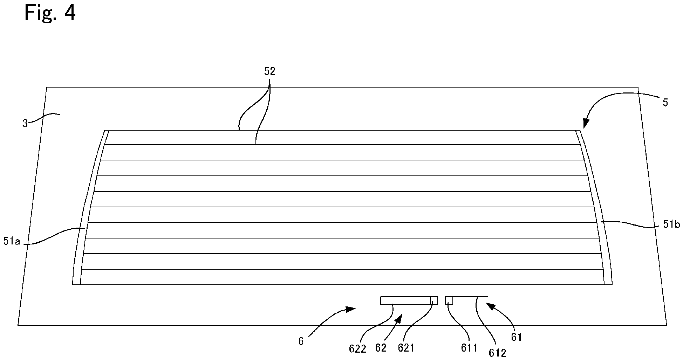

Next, the rear glass 3 will be described with reference to FIG. 4. FIG. 4 is a front view of the rear glass. As shown in FIG. 4, the rear glass 3 is shaped like a rectangle, and is fixed between the upper panel 21 and the lower panel 22 that are arranged in the up-down direction, to the inner panel 1 and the reinforcing frame 4 with a fastening member (not shown) or the like. A defogger 5 and a DTV antenna 6 are mounted on the rear glass 3. Hereinafter, the members will be described in order.

### 2-1. Glass Plate

A well-known rear glass plate for automobiles can be utilized for the rear glass 3. For example, heat absorbing glass, common clear glass, common green glass or UV green glass may be utilized as the glass plate. Such a glass plate needs, however, to realize a visible light transmittance in line with safety standards of the country in which the automobile will be used. For example, solar absorbance, visible light transmittance and the like can be adjusted to meet safety standards. Hereinafter, an example of the composition of clear glass and an example of the composition of heat absorbing glass will be shown.

### Clear Glass

SiO₂: 70 to 73 mass%
Al₂O₃: 0.6 to 2.4 mass%
CaO: 7 to 12 mass%
MgO: 1.0 to 4.5 mass%
R²O: 13 to 15 mass% (R is an alkaline metal)
Total iron oxide in terms of Fe₂O₃ (T-Fe₂O₃): 0.08 to 0.14 mass%

### Heat Absorbing Glass

The composition of heat absorbing glass can, for example, be given as a composition, based on the composition of clear glass, including total iron oxide in terms of Fe₂O₃ (T-Fe₂O₃) at a ratio of 0.4 to 1.3 mass%, CeO₂ at a ratio of 0 to 2 mass%, and TiO₂ at a ratio of 0 to 0.5 mass%, and in which the skeletal component (mainly SiO₂ or Al₂O₃) of the glass is reduced by an amount equivalent to the increase in T-Fe₂O₃, CeO₂ and TiO₂.

Note that the type of glass plate is not limited to clear glass or heat absorbing glass, and is selectable as appropriate according to the embodiment. For example, the glass plate may be a resin window made of acrylic resin, polycarbonate resin or the like.

The rear glass 3 is formed so as to curve appropriately along the shape of the inner panel 1. Also, such a rear glass 3, apart from being constituted by a single glass plate, may be a laminated glass in which an intermediate film such as a resin film is sandwiched by a plurality of plates of glass.

### 2-2. Defogger

Next, the defogger 5 will be described. As shown in FIG. 4, the defogger 5 is arranged in the vicinity of the center of the rear glass 3 in the up-down direction, and is formed so as to extend across the entirety of the rear glass 3 in the left-right direction. Specifically, this defogger 5 includes a pair of bus bars 51a and 51b for power supply that respectively extend in the up-down direction along the two side edges of the rear glass 3. Between the two bus bars 51a and 51b, a plurality of horizontal elements 52 (horizontal heating wires 52) are disposed in parallel at a predetermined interval, and heat for defogging is produced by power supply from the bus bars 51a and 51b.

### 2-3. DTV Antenna

Next, the DTV antenna (Digital Television Antenna) 6 will be described. As shown in FIG. 4, the DTV antenna 6 is arranged downward of the defogger 5, and formed by a core wire-side element (conductive linear element) 61 and a ground-side element (conductive linear element) 62. The core wire-side element 61 includes a rectangular core wire-side power supply part 611 arranged downward of the defogger 5, and a horizontal part 612 extending rightward from this power supply part 611. On the other hand, the ground-side element 62 is provided with a rectangular ground-side power supply part 621 arranged on the left side of the first core wire-side power supply part 611, and a ground main body 622 connected to this power supply part 621. The ground main body 622 is formed by an upper horizontal part extending leftward from the upper end of the ground-side power supply part 621, a vertical part extending downward from the left end of this upper horizontal part, and a second horizontal part that extends rightward from the lower end of this vertical part and is connected to the lower end of the ground-side power supply part 621.

Furthermore, the automobile is provided with a digital television receiver (not shown) and an amplifier (not shown) connected thereto, and the core wire-side power supply part 411 is connected to an inner conductor of a coaxial cable (not shown) connected to the amplifier. On the other hand, the ground-side power supply part 421 is electrically connected to an outer conductor of the coaxial cable.

### 2-4. Material

The defogger 5 and the DTV antenna 6 such as described above are formed by combining wire materials, and these members can be formed by laminating a conductive material having conductivity on the surface of the rear glass 3, such that a predetermined pattern is formed. Any conductive material can be adopted as such a material, and can be selected as appropriate according to the embodiment, with silver, gold, platinum and the like given as examples. Specifically, these members can be formed by, for example, printing and baking a conductive silver paste containing silver powder, glass frit and the like on the surface of the rear glass 3.

### 3. Features

As described above, according to this embodiment, the following effects can be achieved.
(1) Since the rear glass 3 inclines rearward progressing in the downward direction, no metal is arranged rearward of the defogger 5. Accordingly, since the above-described DTV antenna 6 is arranged downward of the defogger 5, a metal, in other words, a material that interferes with reception of radio waves, is not arranged rearward of the DTV antenna 6. Accordingly, it is possible to facilitate the reception of radio waves from behind the vehicle, and improve the reception sensitivity. In particular, the DTV antenna 6 receives receive a broadcast wave in a higher frequency band than AM broadcast waves and FM broadcast waves, and is thus likely to be affected by a metal. Accordingly, the configuration as described above is particularly advantageous in improving the reception performance of the DTV antenna 6.
(2) Since the back door is made of a resin material, rather than a metal that may interfere with the reception of radio waves, it is possible to further improve the reception sensitivity of radio waves.
(3) When the defogger 5 is arranged rearward of the DTV antenna 6, the radiation of the antenna is directed upward, and thus the sensitivity in the horizontal direction decreases, and furthermore, the sensitivity is influenced by the attachment angle of the rear glass 3. However, since the defogger 5 is arranged forward of the DTV antenna 6, antenna sensitivity is ensured regardless of the attachment angle of the rear glass 3. For this reason, since a DTV antenna having the same shape can be applied to the automobiles having various attachment angles of the rear glass, high versatility is achieved.

### 4. Variations

Although an embodiment of the present invention has been described above, the present invention is not limited to the above embodiment, and various changes can be made without departing from the gist of the invention. Note that the following variations can be combined as appropriate.

### 4-1

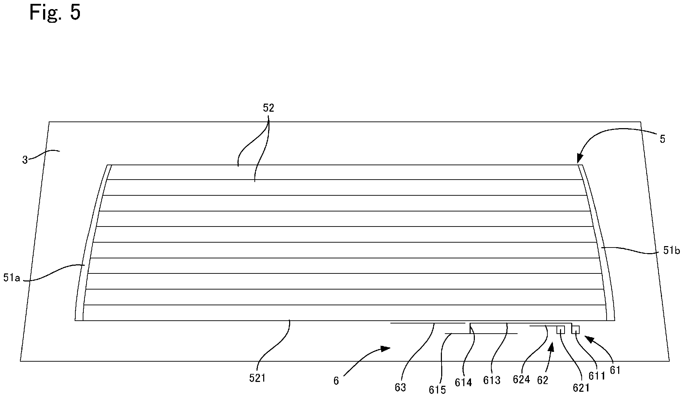

The above-described configuration of the DTV antenna 6 is merely an example, and the number, length, direction, and the like of the elements are not particularly limited. For example, the DTV antenna 6 may be constituted as shown in FIG. 5. In this example, the DTV antenna 6 is constituted by the core wire-side element 61, the ground-side element 62, and an auxiliary element 63. The core wire-side element 61 is provided with a rectangular core wire-side power supply part 611 arranged on the right side downward of the defogger 5, a first horizontal part 613 extending rightward from the power supply part 611, a vertical part 614 extending downward from the left end of the first horizontal part 613, and a second horizontal part 615 extending in the left-right direction from the lower end of the vertical part 614. Among these, the first horizontal part 613 is arranged along a lowermost heating wire 521 located lowermost in the defogger 5.

On the other hand, the ground-side element 62 is provided with a rectangular ground-side power supply part 621 arranged on the left side of the core wire-side power supply part 611, and a ground main body 624 extending leftward horizontally from the upper end of the power supply part 621. The ground main body 624 is arranged downward of the first horizontal part 613 and extends along the first horizontal part 613. Furthermore, the above-described auxiliary element 63 is arranged on the left side of the first horizontal part 613 of the core wire-side element 61, and extends along the lowermost heating wire 521 of the defogger 5.

In this manner, various modes of the DTV antenna 6 can be adopted. Furthermore, the number of the DTV antenna 6 is not particularly limited, and may be two or more.

### 4-2

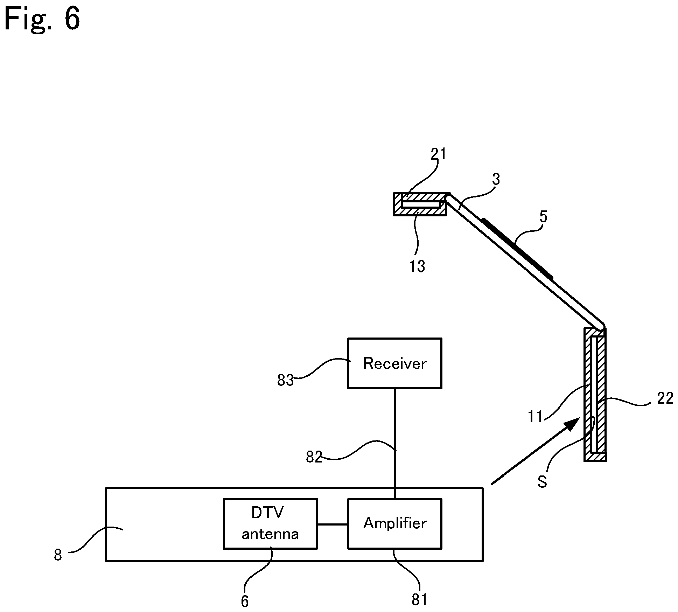

Although the DTV antenna 6 is arranged downward of the defogger 5 in the above-described embodiment, the DTV antenna 6 may also be arranged between the inner panel 1 and the lower panel 22. In other words, as shown in FIG. 6, the DTV antenna 6 may be arranged in a space S between the main body part 11 of the inner panel 1 and the lower panel 22. In this case, the DTV antenna 6 is arranged on the antenna substrate 8. Specifically, the antenna substrate 8 is provided with the DTV antenna 6 and an amplifier 81, and this antenna substrate 8 is fixed inside the above-described space S. Then, a coaxial cable 82 connected to the amplifier 81 is connected to a receiver 83 provided inside the vehicle. Note that, the amplifier 81 may also be provided inside the vehicle.

With this configuration, the DTV antenna 6 is arranged rearward of and spaced apart from the defogger 5, and thus it is also possible to decrease the influence of radio wave interference caused by the defogger 5. Accordingly, the reception sensitivity of the antenna can be improved.

Furthermore, the DTV antenna 6 may also be provided to both the rear glass 3 and above-described space S. In this manner, it is possible to achieve a diversity effect, which can further improve the reception sensitivity of the antenna. In this case, the DTV antennas may have the same or different patterns. If the same pattern is used, for example, arranging the DTV antennas 6 spaced apart from each other by 1/8 λ or more makes it possible to achieve an effective diversity effect. On the other hand, if different patterns are used, it is preferable that the patterns are formed so that the directionalities of the DTV antennas 6 are different from each other so as to compensate for each other.

### 4-3

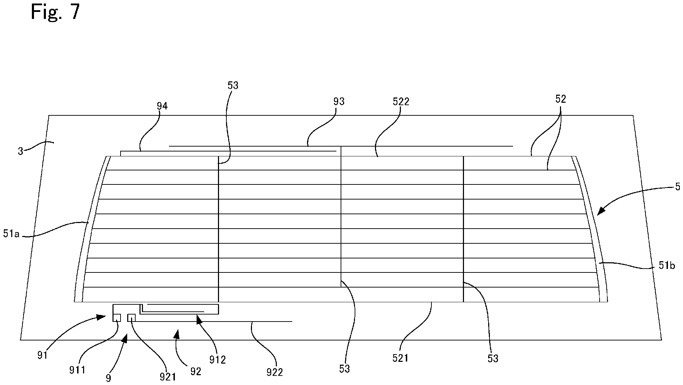

Although the above embodiment describes the back door as being provided with only the DTV antenna 6, a DAB antenna may also be provided instead of the DTV antenna 6. Hereinafter, this will be described with reference to FIG. 7. In this example, a DAB antenna 9 is provided in a region downward of the defogger 5 on the rear glass 3. This DAB antenna 9 is constituted by a core wire-side element 91, a ground-side element 92, and two auxiliary elements 93, 94 arranged upward of the defogger 5. The core wire-side element 91 is provided with a rectangular core wire-side power supply part 911 arranged on the left side downward of the defogger 5, and an element main body 912 that extends rightward from the power supply part 911 and bends at multiple places. Furthermore, the ground-side element 92 is provided with a ground-side power supply part 921 arranged on the right side of the core wire-side power supply part 911 of the core wire-side element 91, and a horizontal part 922 extending rightward from this power supply part 921.

Also, when the DAB antenna 9 is provided, the defogger 5 is provided with three vertical lines 53 for equally dividing the heating wire 52 into four. Note that, these vertical lines 53 do not contribute to heating, but contribute to an improvement in the reception performance of the DAB antenna 9 as a part of the antenna. In other words, the DAB antenna 9 is provided with the two auxiliary elements 93 and 94 as described above, and one end of the auxiliary element 93 is connected to the vertical line 53 of the defogger 5. To be more specific, the first auxiliary element 93 is arranged upward of the defogger 5, and is formed into a T-shape that extends upward from the middle vertical line 53. Furthermore, the second auxiliary element 94 is formed so as to extend in an L-shape from the heating wire 522 arranged on the uppermost portion in proximity to the left bus bar 51a.

In this manner, although the DAB antenna 9 may be also arranged on the rear glass 3, the DAB antenna 9 is also likely to be affected by a metal because the DAB antenna 9 receives the radio waves in a higher frequency band than AM broadcast waves, similarly to the DTV antenna 6. Accordingly, similarly to the DTV antenna 6, if the DAB antenna 9 is also arranged downward of the defogger 5, the reception performance can be improved. However, the configuration of the DAB antenna 9 is not particularly limited. Accordingly, as shown in FIG. 7, the auxiliary elements 93, 94 may also be provided upward of the defogger 5.

Note that, the core wire-side power supply part 911 and the ground-side power supply part 921 of the DAB antenna 9 are connected to an amplifier and a receiver installed inside the vehicle via coaxial cables.

Additionally, the DAV antenna 6 and the DAB antenna 9 may both be arranged downward of the defogger 5. Furthermore, an FM antenna, an AM antenna, or the like may also be arranged in a region upward or downward of the defogger 5.

Additionally, as shown in FIG. 6, the DAB antenna 9, the FM antenna, and the AM antenna may also be arranged in the space S between the lower panel 22 and the main body part 11 of the inner panel 1. In other words, it is possible to arrange at least one of the DTV antenna 6, the DAB antenna 9, the FM antenna, and the AM antenna on the antenna substrate 8, and arrange this antenna substrate 8 in the above-described space S. It is also possible to arrange at least one of these antennas both on the rear glass 3 and in the space S.

### 4-4

The configuration of the back door is not particularly limited, as long as the back door includes a resin panel, this resin panel forms an opening part into which the rear glass 3 is fitted, and the glass plate inclines downward progressing in a rearward direction. Accordingly, the back door may include one resin panel in which the upper panel and the lower panel are integrally formed, for example, or the back door may include more than two panels.

Furthermore, from the viewpoint of the reception sensitivity of the antenna, it is preferable that all the panels that form the back door are formed by a resin material, but at least a part of the panels may be made of metal. For example, it is also possible that the reinforcing frame is made of metal, and at least a part of another panel is made of metal.

### 4-5

The amplifier may also be omitted and the power supply part and the receiver may be directly connected to each other.

### Working examples

Hereinafter, working examples of the present invention will be described. The present invention is, however, not limited to the following working examples.

### 1. Consideration on Shape of Antenna

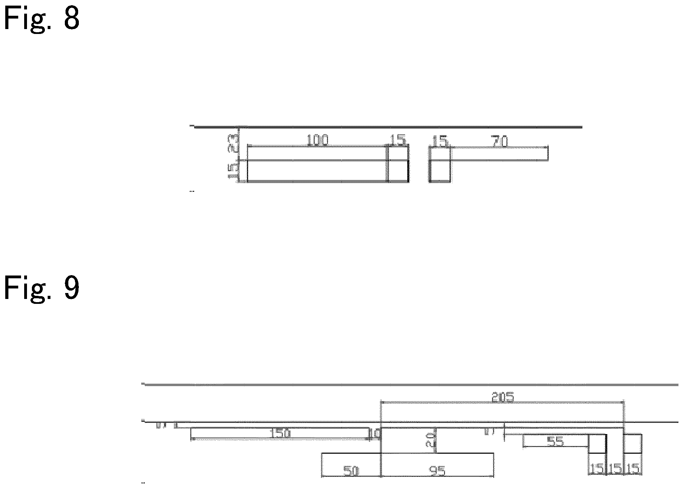

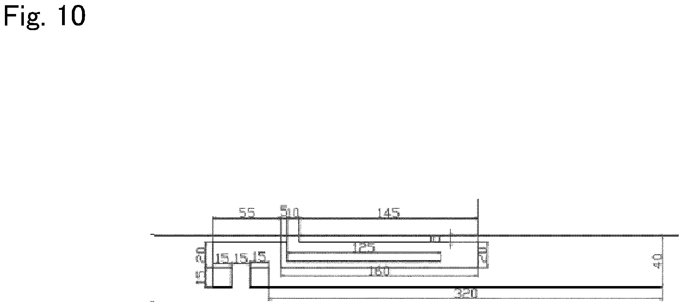

Glass antennas having patterns shown in FIGS. 4, 5, and 7 were prepared as working examples 1, 2, and 3. The dimensions of the antennas are as shown in FIGS. 8, 9, and 10 (units are in mm).

Next, the glass antennas according to working examples 1 to 3 as described above were mounted to an automobile having the back door shown in FIGS. 1 and 2, and thereafter the automobile was arranged on a turntable. Then, reception sensitivity in the horizontal direction was measured. At this time, 120 pieces of data were measured in a 360° region at 3° pitch while rotating the turntable.

The DTV antennas according to working examples 1 and 2 were evaluated based on an average value obtained in a 180° interval on the rear side (transmission antenna polarized wave: horizontally polarized wave). On the other hand, the DAB antenna according to working example 3 was evaluated based on an average value obtained in a 360° interval (transmission antenna polarized wave: vertically polarized wave).

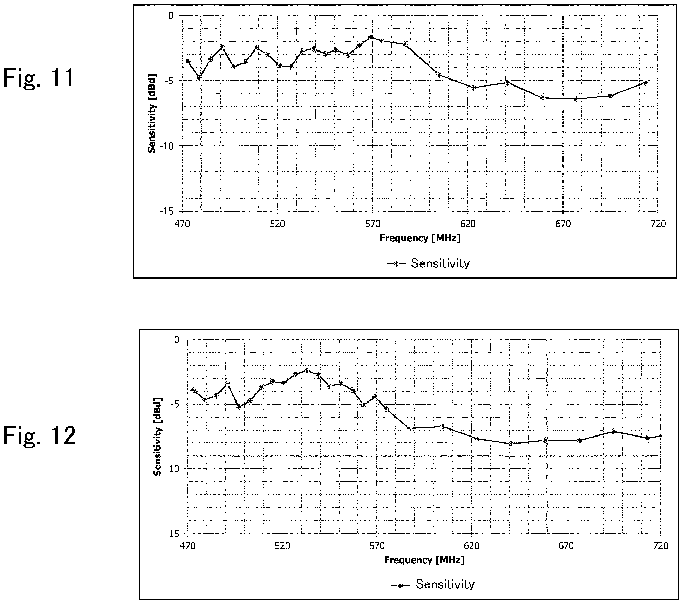

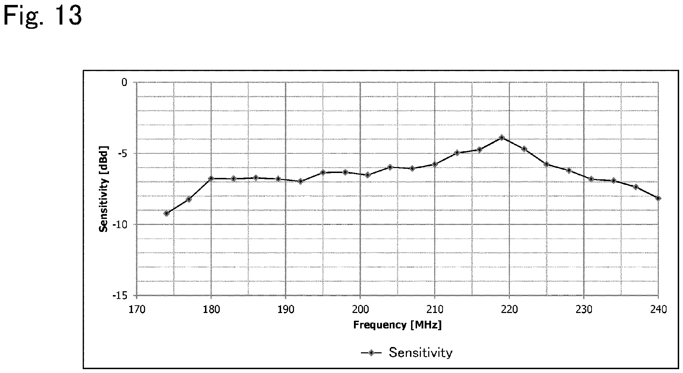

The results are shown in FIGS. 11 to 13. According to these figures, the reception sensitivities of working examples 1 to 3 are generally high in all the frequencies. These figures also show that the reception sensitivities are high enough to stably receive the broadcast waves regardless of the frequency. In particular, although the DTV antennas of FIGS. 11 and 12 can receive the radio waves in very wide frequency band, there is no significant drop in the reception sensitivity, and generally a constant reception sensitivity can be achieved.

### 2. Consideration on Attachment Angle of Glass Plate

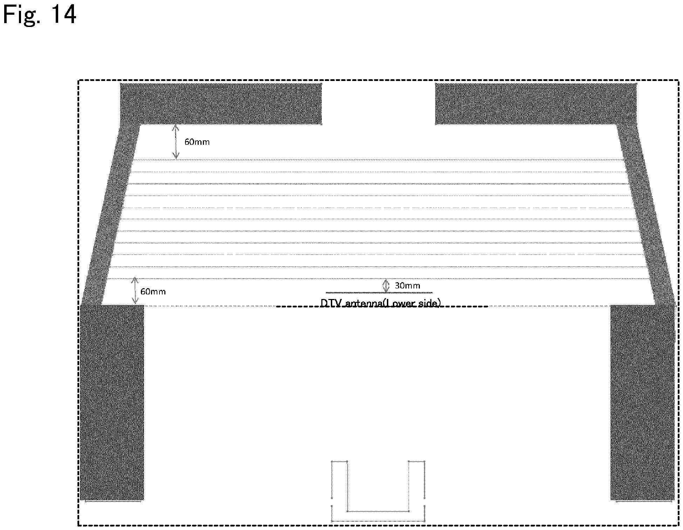

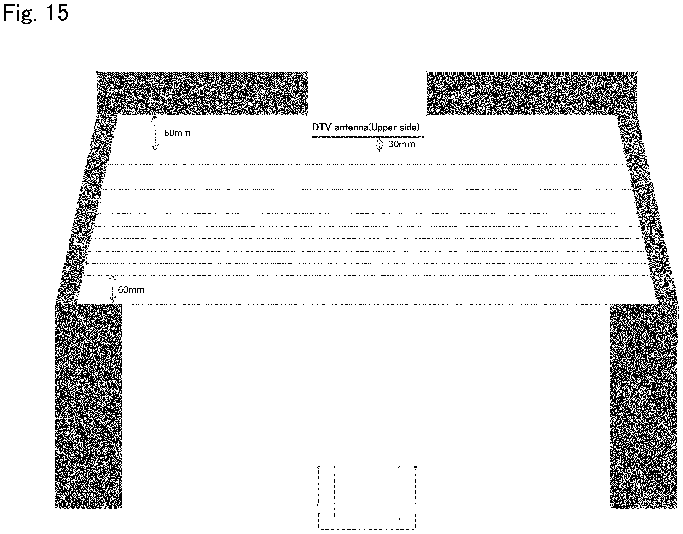

Back doors according to working example 4 shown in FIG. 14 and comparative example 1 shown in FIG. 15 were set by simulation. In working example 4, a DTV antenna was arranged downward of the defogger, and in comparative example 1, the DTV antenna was arranged upward of the defogger (the length of the antenna in the horizontal direction is 200 mm in both cases) . In these back doors, a rear glass is attached to a resin panel.

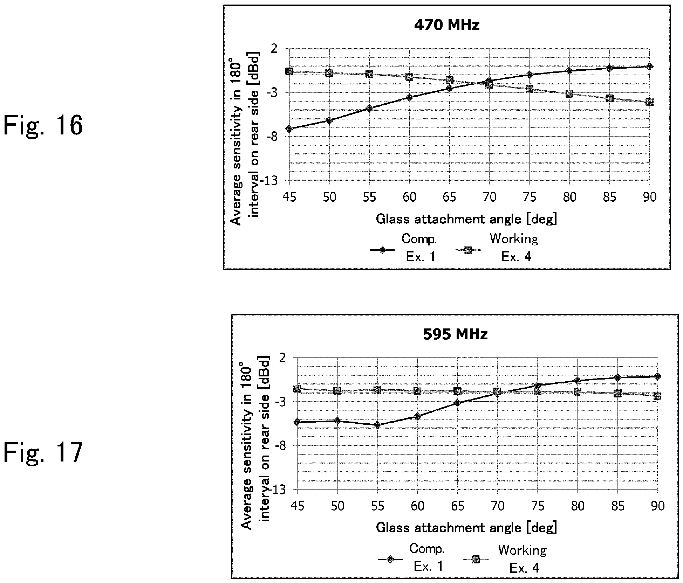

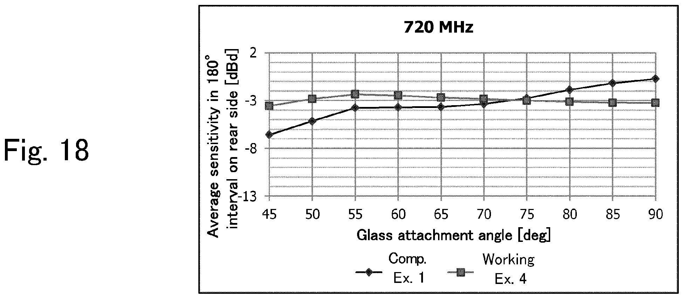

The reception sensitivity at the frequencies of 470 MHz, 595 MHz, and 720 MHz, which respectively correspond to the lower limit, the middle, and the upper limit of the frequency range of DTV were calculated, while changing the attachment angle of the rear glass by 5° at a time within the range of 45° to 90°. Specifically, the reception sensitivities of H polarized waves were calculated every 3° in a 360° area in the horizontal direction, and of these sensitivities, the average values of the values measured in a 180° interval on the rear side were graphed as shown in FIGS. 16 to 18. Note that, in order to compare pure antenna directional characteristics, mismatch loss was excluded from the reception sensitivities shown in the graphs. Additionally, it is assumed that the glass plate extends in the vertical direction when the attachment angle is 90°.

Three dimensional electromagnetic field simulation software (software for 3D time-area simulation of electromagnetic fields) was used for calculating the reception performance. In this simulation, the glass plate was modeled, assuming typical tempered glass having a thickness of 3.1 mm. Also, the model was used assuming that the wire widths of the defogger and the antenna element were 1 mm, and the shortening coefficient of the glass plate was 0.65. As the simulation procedure, (1) the vehicle, the dielectric body, the antenna and the like were modeled and the materials were set, and (2) appropriate meshes for the vehicle, the dielectric body, the antenna and the like were set, and thereafter simulation was executed. The method for setting and executing such simulation is common to considerations of all the working examples and comparative examples shown below.

As shown in FIGS. 16 to 18, in working example 4, in the range of the attachment angles from 45° to 90°, the reception sensitivities were substantially constant regardless of the attachment angle at all of the frequencies of 470 MHz, 595 MHz, and 720 MHz. On the other hand, in comparative example 1, the reception sensitivity changes depending on the attachment angle, and the smaller the attachment angle is, the longer the apparent length of the defogger in the horizontal direction is, and thus the reception sensitivity decreases. It was found that, compared to comparative example 1, working example 4 has a higher versatility because a DTV antenna having the same shape can be applied to vehicles having various attachment angles of the rear glass. In addition, it was also found that when the attachment angle is smaller than 70°, the reception performance of working example 4 becomes greater than that of comparative example 1.

### Reference Signs List

- 1: Inner panel (resin panel)
- 21: Upper panel (resin panel)
- 22: Lower panel (resin panel)
- 3: Rear glass
- 5: Defogger
- 6: DTV antenna
- 9: DAB antenna

## Claims

1. A rear glass configured to be attachable to an opening part of a resin panel in a rear of a vehicle, the rear glass comprising:
a glass plate configured to be attached so as to incline downward progressing in a rearward direction;
a defogger configured to heat a vision area of the glass plate; and
an antenna that is arranged downward of the defogger.

2. The rear glass according to claim 1,
wherein the antenna is a DTV antenna or a DAB antenna.

3. The rear glass according to claim 1,
wherein the antenna is a DTV antenna.

4. The rear glass according to any one of claims 1 to 3,
wherein the glass plate is configured to be attached to the vehicle at an angle of less than or equal to 70°.

5. The rear glass according to any one of claims 1 to 4,
wherein the antenna includes two power supply parts, and two conductive linear elements extending from the two power supply parts, respectively, and
the two power supply parts and the two conductive linear elements are arranged only downward of the defogger.

6. A back door configured to be attachable to a rear of a vehicle, the back door comprising:
a rear glass;
a defogger configured to heat a vision area of the rear glass;
a resin panel that includes an opening part and that supports the rear glass such that the rear glass inclines downward progressing in a rearward direction so as to cover the opening part; and
at least one DTV antenna or DAB antenna,
wherein the antenna is arranged downward of the defogger of the rear glass or downward of the rear glass of the panel.

7. The back door according to claim 6,
wherein at least one of the antennas is a DTV antenna.

8. The back door according to claim 6 or 7, comprising:
a plurality of the antenna including a first antenna and a second antenna,
wherein the first antenna is arranged downward of the defogger on the rear glass, and
the second antenna is arranged on the panel.
